# EUROPÄISCHE PATENTSCHRIFT

(11) **EP 1 348 252 B1**
(45) Veröffentlichungstag und Bekanntmachung des Hinweises auf die Patenterteilung: **25.04.2012**
(21) Anmeldenummer: 01956385.7
(22) Anmeldetag: 26.07.2001
(51) Int. Cl.: H02P 9/48

(54) **VERFAHREN ZUR KONSTANTSTROMERZEUGUNG SOWIE VORRICHTUNG ZU SEINER DURCHFÜHRUNG**
METHOD FOR CONSTANT-CURRENT GENERATION AND DEVICE USED TO CARRY OUT SAID METHOD
PROCEDE ET DISPOSITIF DE PRODUCTION DE COURANT CONSTANT

(30) Priorität: 26.07.2000 DE 10036419
(43) Veröffentlichungstag der Anmeldung: 01.10.2003
(73) Patentinhaber: PERMAGEN Motoren- und Generatorentechnik GmbH, 01454 Radeberg (DE)
(72) Erfinder: ZELLER, Peter Kilian, 72770 Reutlingen/Ohmenhausen (DE)
(74) Vertreter: Witte, Weller & Partner
(86) Internationale Anmeldenummer: PCT/DE2001/002835
(87) Internationale Veröffentlichungsnummer: WO 2002/009267

(56) Entgegenhaltungen:
- EP-A- 0 704 961
- DE-A- 3 930 050
- US-A- 5 255 175

## Beschreibung

Die Erfindung betrifft eine Vorrichtung nach dem Oberbegriff und dem kennzeichnenden Teil des Patentanspruchs 1 sowie ein Verfahren zur Konstantstromerzeugung nach dem Oberbegriff und dem kennzeichnenden Teil des Patentanspruchs 8.

Stromerzeuger oder Generatoren, insbesondere solche, die Strom aus Verbrennungsmotoren produzieren, sind bekannt, bspw. Generatoren, bei denen die Ausgangsfrequenz In einem festen Verhältnis zur Antriebsdrehzahl steht. Insbesondere sind Stromerzeuger, die drehzahlkonstant arbeiten, bekannt. Bei kleineren Generatoren mit permanentmagnetischer Erregung und Gleichstromzwischenkreis wurde meist eine Parallelreglerlösung angestrebt, bei der überschüssige erzeugte Leistung In thermische Verluslteistung/Energie umgewandelt, d.h. verschwendet wurde, um Spannungskonstanz bei Drehzahlunabhängigkeit zu erreichen.

So Ist bspw. von der Fa. HONDA ein kombiniertes Motor/Generatorsystem zur Stromerzeugung für einphasige Netzersatzsysteme bekannt geworden, bei dem ein Außenrotor eines Generators in einen Verbrennungsmotor integriert wurde, wodurch aufwendige Generatorwellen und Generatorbauteile eingespart werden konnten. Dieses bekannte System war aber insofern nachteilig, als es stets einen speziell ausgelegten und angepaßten Verbrennungsmotor als Energiequelle voraussetzte. Diese Bauweise erfüllt außerdem keine hohen Schutzartanforderungen - d.h. eignet sich nicht für den Einsatz unter speziellen Umgebungsbedingungen, wie Freifeldeinsatz unter Witterungsbedingungen oder aber in Feuchträumen oder in Bereichen, In denen hohe Schutzarten gesetzlich gefordert sind, bspw. bei Feuerwehren, technischen Hilfsorganisationen, Feldlazaretten u.s.w.

Aus der US 5,255,175 ist ein Stromerzeugungssystem mit einer Einrichtung zur Erzeugung von Wechselstrom und einer Einrichtung zur Umformung des Wechselstroms in Gleichstrom bekannt. Eine weitere Einrichtung erkennt einen von der Generatoreinrichtung zur Umformeinrichtung fließenden Wechselstrom und stellt ein Wechselstromsignal bereit. Eine Generatoreinrichtung generiert eine von Frequenzkomponenten freie Stromamplitudenreferenz, welche die Amplitude des Wechselstroms bestimmt. Eine Steuerungseinrichtung vergleicht das Wechselstromsignal mit der Stromamplitudenreferenz, um ein Vergleichsergebnis bereitzustellen und um die Stromumformungsoperation der Umformeinrichtung entsprechend dem Vergleichsergebnis so zu steuern, dass die Amplitude des Wechselstroms eine der Stromamplitudenreferenz entsprechende Amplitude nicht überschreitet.

DE 39 30 050 A1 zeigt einen Stromgenerator mit einem Ständer mit Elektromagneten, einem Außenläufer, der konzentrisch zum Ständer auf einer Antriebswelle sitzt und eine Anzahl von Magneten trägt, die den Elektromagneten des Ständers zugewandt angeordnet sind, und mit einem Stromabnehmer, der mit den Wicklungen der Elektromagnete des Ständers verbunden ist. Die Magnete des Außenläufers sind in radialer Richtung verschiebbar angeordnet und in Richtung auf die Achse der Antriebswelle vorgespannt.

Es ist eine Aufgabe der Erfindung, eine verbesserte Vorrichtung und ein verbessertes Verfahren zur Konstantstromerzeugung aufzuzeigen, die eine drehzahlunabhängige Stromstärke für einen weiten Bereich von Eingangsdrehzahlen ermöglichen.

Die Aufgabe wird erfindungsgemäß durch eine Vorrichtung nach Anspruch 1 und ein Verfahren nach Anspruch 8 gelöst.

Dadurch, daß nun eine Rückwirkungssteuerung im Generator selbst über eine Veränderung der Verteilung des erzeugten Stroms In Laststrom und Rückwirkungsstrom erfolgt, ist es möglich, die Stromerzeugung aus der Rotationsenergie zu optimieren, da durch Aufbau von Gegenmagnetfeldem im Generator ein sehr geringer Energieüberschuß entstehen kann, der thermisch vernichtet werden muß.

Durch das erfindungsgemäße Verfahren ist es möglich, verschiedenste Rotationsenergiequellen zur Herstellung von konstantem Strom einzusetzen, so Verbrennungsmotoren, wie Sterlingmotoren, Dieselmotoren, Wankelmotoren, Ottomotoren; Turbinen, angetriebene Räder, Windkrafträder, Hydraulikmotoren, Luftmotoren, etc..

Es ist vorteilhaft, wenn die Rotationsenergiequelle, bspw. ein Verbrennungsmotor, durch den Steuerschaltkreis geregelt wird. Dazu bietet sich bspw. eine geregelte Verstellung der Drosselklappe, eine Änderung der Trelbstoffzufuhr, eine Verstellung eines Schützes bei wasserkraft angetriebenen Rädern oder Turbinen, eine Veränderung der Luft/Gaszufuhr bei Gas/Luftmotoren oder -turbinen, eine Verstellung der Turbinenschaufeln, des hydraulischen Drucks oder eine Aufteilung des Volumenstroms etc. an, um eine optimierte Energiezufuhr zum Generator zu gewährleisten. Dabei kann die Optimierung hinsichtlich des Treibmittelverbrauchs, des Geräuschs, der Lebensdauer, der Schadstoffemission, der Wärmeentwicklung, des Verbraucheranforderungen, bspw. bei dynamischen Lastanforrderungen oder Belastungsschwankungen, der Antriebsauswahl (bspw. Umschalten von Wasser/Windkraft auf Verbrennungsmotor oder zwischen verschiedenen Motoren) Vermeidung kritischer Drehzahlbereiche oder Lastbereiche erfolgen. So ist es speziell bei Dieselmotoren möglich, mit definierten Grundlasten zu arbeiten, um unvollständige Verbrennung und dadurch erfolgende Ablagerungen im Brennraum sowie Emissionen zu vermeiden oder aber gezielt "Freibrennzyklen" für Rußfilter zur Vermeidung von Wartungsarbeiten vorzusehen.

Es ist besonders vorteilhaft, wenn die Geometrie der Permanentmagnetanordnung des angetriebenen Generatorrotors und auch der Statorbaugruppe aufeinander abgestimmt sind, sodaß diese Geometrien gemeinsam sowohl lokale magnetische Sättigungseffekte als auch gezielte Feldverzerrungseffekte beim Generatorbetrieb bewirken, so daß ein drehzahlunabhängiger Konstantstrom generiert wird, wobei eine mit dem Generator verbundene Rückwirkungssteuerung entsprechend den Generatorparametem das im Generator erzeugte Magnetfeld derart steuert, daß eine im wstl. konstante Stromstärke unabhängig von der in den Generator eingebrachten und abgeführten Energie resultiert und von diesem abgegeben wird. Die geeignete Auslegung der Geometrien läßt sich in der dem Fachmann bekannten Weise, wie sie bspw. von E. Spring in "Elektrische Maschinen", Springer Verlag Berlin/Heidelberg 1999 erläutert wird, sowie der finiten Elemente-Methode berechnen.

Dadurch ist es möglich, in einfacher Weise auch Energiequellen mit nicht steuerbarem Verhalten, wie Windkraftanlagen oder aber Wasserkraftanlagen als Rotationsenergiequelle einzusetzen und von diesen ohne größere Probleme Konstantstrom zu erhalten.

Es ist vorteilhaft, wenn der Generator einen Außenrotor, der Permanentmagneten aufweist, besitzt, da so die Baugröße gering gehalten werden kann und bei gleicher Masse das Massenträgheitsmoment erheblich größer als bei der üblichen Bauweise des Innenläufers ist, wodurch Schwungräder an rotationsenergieerzeugenden Motoren reduziert werden oder vollständig entfallen können. Es kann dadurch auch die Fixierung der Permanentmagneten am Läufer erleichtert bzw. deren Beanspruchung durch die Fliehkraft günstig zur Verstärkung der Verbindung eingesetzt werden. Es ist dabei besonders vorteilhaft, falls der Außenrotor einstückig mit einem Außengehäuse ausgebildet ist, das den Generator schützt zusätzliche Schwungradeigenschaften besitzt und eine Kapselung gegen Feuchtigkeit und Staub und andere Verunreinigungen bietet. Dieses Außengehäuse kann vorteilhafterweise auch mit Luftschaufeln od. dgl. ausgestattet sein, die ggf. eine Kühlung des Generators im Betrieb sicherstellen, ohne daß - wie häufig beim Stand der Technik - zusätzliche Kühleinrichtungen vorgesehen werden müssen. Auch diese Auslegung trägt zu einer kompakten Bauweise, geringer Anfälligkeit des Stromerzeugers und kostengünstigen Fertigung bei.

Bei einer besonders bevorzugten Ausführungsform wird der Rotor direkt mit der Abtriebswelle der Energiequelle - bevorzugt einem Motor - verbunden - dies ist durch die drehzahlunabhängige Stromerzeugung möglich und hat unter anderem den Vorteil, daß Lager, Kupplungen, etc., wie sie bei bekannten Stromerzeugern notwendig waren, eingespart werden können und eine leichtere vereinfachte Bauweise resultiert. Auch kann die Anzahl an Verschleißteilen dadurch verringert werden.

Nachfolgend werden bevorzugte Ausführungsbeispiele der Erfindung anhand der begleitenden Zeichnung näher erläutert. Dabei zeigt:
Fig. 1 ein Flußdiagramm des erfindungsgemäßen Verfahrens
Fig. 1a ein Schaltbild einer Rückwirkungssteuerung, die das erfindungsgemäße Verfahren verwirklicht;
Fig. 2 a ein Teil eines Schnitts durch eine optimierte Läufer/Statoranordnung eines erfindungsgemäßen Stromerzeugers mit Ferrit-Magneten im Rotor

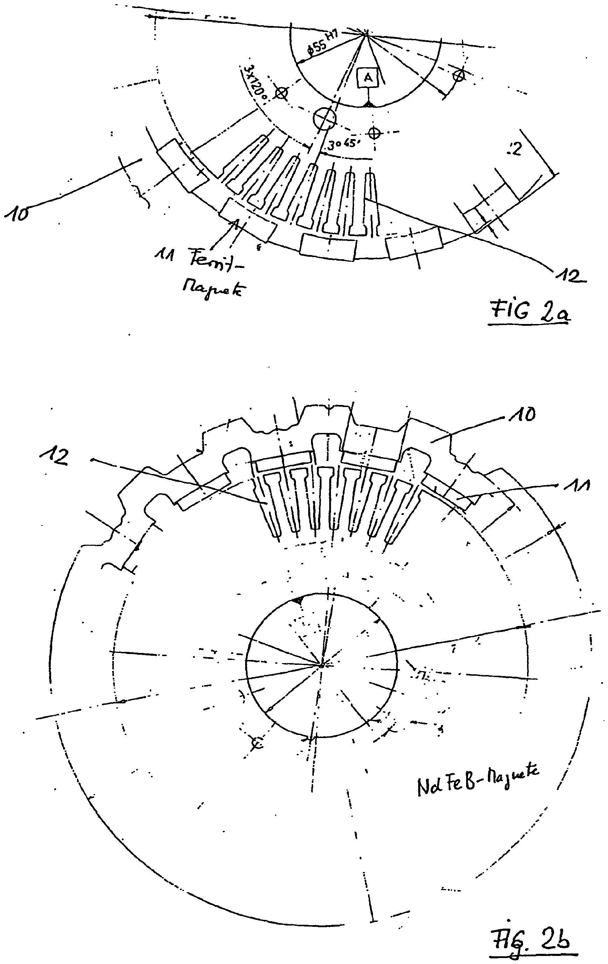

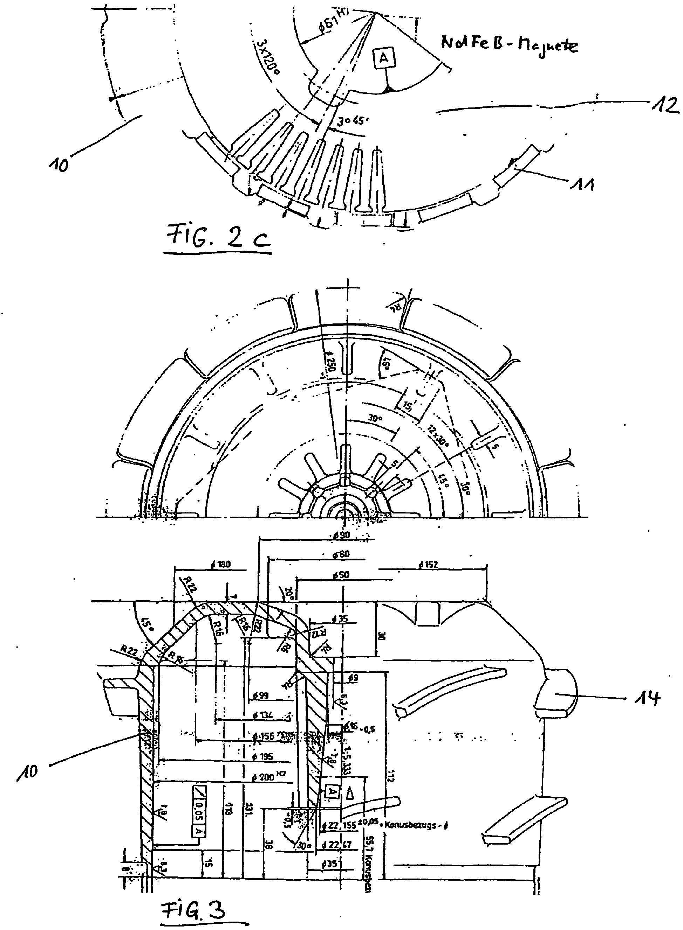

Fig. 2 b eine Teilansicht eines Schnitts einer optimierte Läufer/Statoranordnung eines erfindungsgemäßen Stromerzeugers mit NdFeB-Magneten im Rotor
Fig. 2c eine Teilansicht eines Schnitts einer optimierten Läufer/Statoranordnugn eines erfindungsgemäßen Stromerzeugers mit NdFeB-Magneten
Fig. 3 eine Darstellung einer Rotorgeometrie
   und

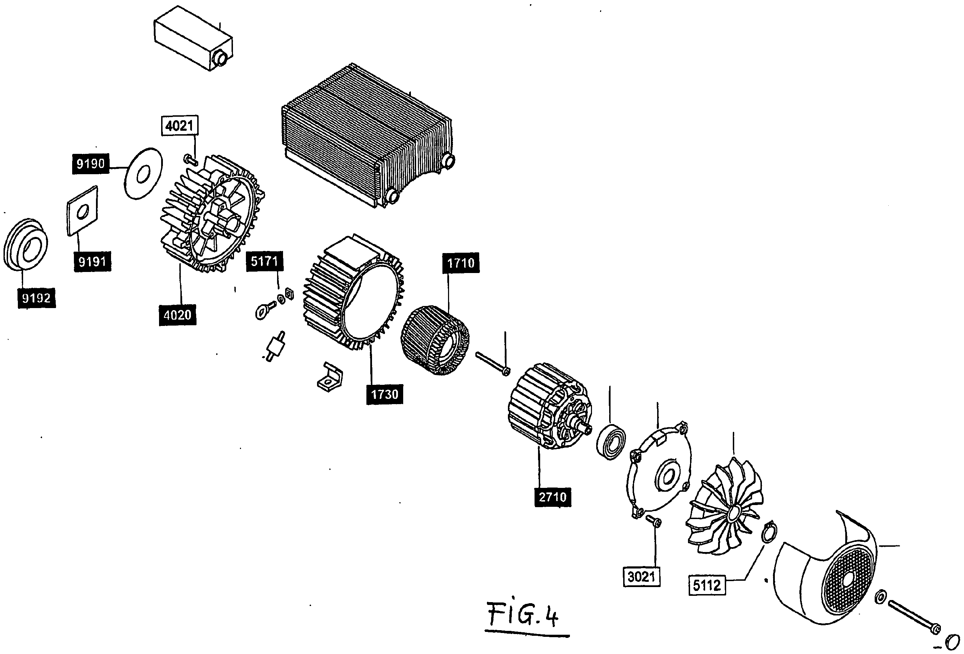

Fig. 4 eine Darstellung einer weiteren bevorzugten Rotorgeometrie.

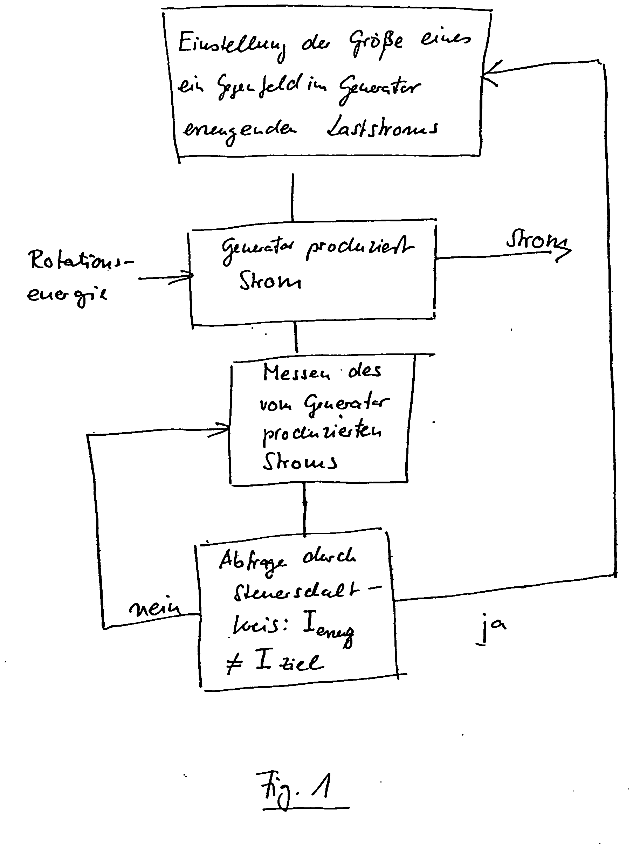

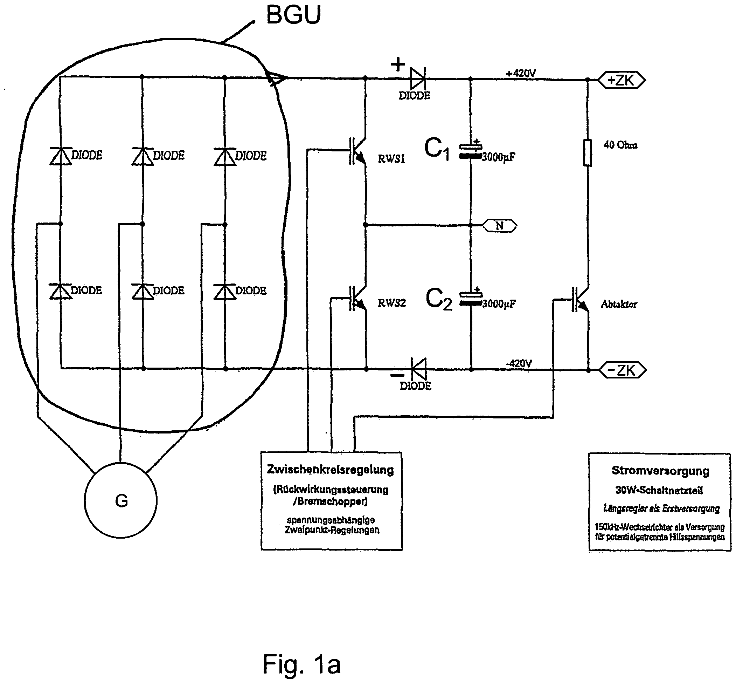

Wie in Fig. 1 gezeigt, wird beim erfindungsgemäßen Verfahren eine Rückkopplungssteuerung vorgesehen, die dazu befähigt ist, über einen Regler das Verhältnis zwischen einem Laststrom/ und dem Generatorstrom zu ändern. Es wird nun der vom Generator im Stator 12 erzeugte Strom gemessen und in einer Rückkopplungssteuerung von einer internen Logik dahingehend überprüft, ob er innerhalb des Sollbereichs liegt. Falls der erzeugte Strom nicht im Sollbereich liegt, wird von der Rückkopplungssteuerung das Verhältnis Laststrom/Generatorstrom so geändert, daß der Generatorstrom wieder im Sollwertbereich liegt. Diese Abfragen und Einstellung des Generatorstrom/Laststromverhältnisses werden ständig durchgeführt, um eine Stromkonstanz des Generatorstroms zu gewährleisten. Bevorzugt wird als Laststrom ein Strom verwendet, der ein Gegenmagnetfeld im Generator aufbaut, wodurch dann die erzeugte Strommenge verringert werden kann.

In Fig. 1a ist eine bevorzugte Ausführungsform eines Regelschaltkreises für die Durchführung des Verfahrens der Fig. 1 gezeigt. Der Generator G wird dabei als Stromquelle - Im Gegensatz zum Stand der Technik, bei dem Generatoren meist als Spannungsquelle eingesetzt werden, verwendet und ist rückwirkungssteuerbar. Der von ihm abgegebene Strom wird mittels des ungesteuerten 6-pulsigen Gleichrichters im Kreis mit der Bezeichnung BGU gleichgerichtet und in die Zwischenkreisregelung eingespeist.

Hier wird der Generator dann, falls er zu viel Strom erzeugt, kurzgeschlossen, damit keine Energie abgegeben wird und die Spannung auf dem erwünschten Wert gehalten werden kann. Die gesteuerten Schaltelemente RWS1 und RWS2 (bspw. IGBTs = isolated gate bipolar transistor) sind getrennt voneinander ansteuer- und schließbar, sodaß symmetrisch Spannung zwischen der Mitte der Schalter zu den Klemmen aufgebaut wird. Dabei sorgt das - in Fig. 1a - gegenüberliegende Schaltelement für Ladung des diagonal gegenüberliegenden Kondensators - also RWS1 für C2 und RWS2 für C1. Falls beide IGBTs offen sind, werden beide Kondensatoren C1 und C2 geladen. Falls beide geschlossen sind, ist der Generator kurzgeschlossen und es findet keine Kondensatoriadung statt. Falls nur ein IGBT offen ist, wird der schräg gegenüberliegende Kondensator geladen. So wird bei niedrigen Generatordrehzahlen das "Strompumpen" über die Kondensatoren dennoch zu einer gewünschten Endspannung führen. Auf diese Art und Weise wird der Antriebsmotor vom Generator nicht stark belastet/überbelastet da das erflndungsgemäße Verfahren den Strom so verteilt, daß die Nennspannung auch bei niedrigen Generatordrehzahlen dargestellt wird - der Generator wird also drehzahltoleranter. Zum Vergleich: Ein "normaler" Generator mit einer Leistung von ca 10 kW besitzt bei gleicher Außengeometrie eine Drehzahltoleranz von ca 30 % bei - Konstantspannungsauslegung - etwa 1 : 1,3. Demgegenüber wird erfindungsgemäß eine Toleranz von etwa 1: 3,5 erzielt. Es handelt sich also erfindungsgemäß um einen Konstantstrom-Generator, der eine Drehmomenteinprägung auf die Antriebswelle ermöglicht und dynamische Drehzahländerungen In einem relativ weiten Drehzahlbereich problemlos tolerieren kann, ohne daß Überspannungen auftreten. In vielen Fällen können so auch kleinere Motoren für die erwünschte Spannungserzeugung eingesetzt werden.

In Fig. 2 sind nun bevorzugte Geometrien der Läufer/Statoranordnung eines erfindungsgemäßen Stromerzeugers dargestellt, wobei zur Vereinfachung die Drahtwicklungen um die Kerne des Stators 12 weggelassen wurden. Wie aus der Zeichnung ersichtlich, stehen hier bei Fig. 2 a bei Ferrit-Permanentmagneten einem Magneten 11 im Rotor 10 etwas mehr als zwei Spulenkerne bestimmter Geometrie zur entsprechenden Ausbildung eines erregten Magnetfeldes, das bei Rotation zu einem Konstantstrom führt, gegenüber. In Fig. 2b ist eine Anordnung mit einem NdFeB-Magneten dargestellt - dort ist eine etwas andere Magnet Geometrie angewendet, sowie eine etwas andere Statorgeometrie 12.

Die spezielle Geometrie muß in Anbetracht der unterschiedlichen permanentmagnetischen Materialien bzw. des verschiedenen Verhaltens der magnetischen Felder entsprechend den Anforderungen des Einzelfalls optimiert werden, wie es dem Fachmann bekannt ist.

Durch die geometrische Ausgestaltung entsteht ein Selbstregefungseffeld im Generator selbst - d.h. es wird bei höheren Drehzahlen ein immer größer werdender Bremseffekt durch den dynamischen Feldaufbau des magnetischen Materials auftreten, der bei niedrigeren Geschwindigkeiten nicht entsteht. Mit wachsender Drehzahl wird eine Verkleinerung der magnetisch wirksamen Polfläche durch den Feldverzerrungseffekt bewirkt sowie partieller lokaler Feldkurzschluß im erweiterten Luftspattbereich (Luftspaltauslaufzone). Die Rotorgeometrie hat spezieller Zonen für lokale Magnetfeld-Sättigungen.

In Fig. 3 ist nun eine Darstellung einer Ausführungsform des Rotors, der hier auch als schützendes und abschließendes Gehäuse dient, gezeigt Wie aus der Zeichnung ersichtlich, kann bei dieser und ähnlichen Ausführungsformen der innenliegende empfindliche Stator 12 mit den Wicklungen durch die topfartige Ausgestaltung des Rotors 10 geschützt werden, während auf den Rotoroberflächen, die nicht durch die Permanentmagneten 11 besetzt sind, Gasleitschaufeln 14 und andere Luftleitelnrichtungen, wie Nuten etc. vorgesehen sein können, wodurch eine problemlose Ableitung von Wärme vom Generator bzw. Durchleiten von Luft etc. erfolgen kann. Allerdings ist die topfartige Ausgestaltung nicht zwingend, wichtig ist alleine eine Rotorausgestaftung, die die notwendige geometrische Anordnung der daran befestigten Permanentmagneten sicher aufrechterhält. Falls eine bessere Kühlung erforderlich ist, können Durchbrüche im Rotor 10 vorgesehen werden oder aber weitere Leitabschnitte.

In Fig. 4 ist eine alternative Ausführungsform der Rotorauslegung in Explosionsdarstellung gezeigt. Hier ist der Läufer 2730 getrennt von einem Außengehäuse 4021 ausgebildet, wodurch ein besserer Schutz des Läufers gegeben ist. Wichtig ist hier das Mitnahmeelement 2710, das eine einseitige Aufhängung des Rotors ermöglicht und gleichzeitig als Radialverdrängungslüfter wirkt.

Der Rotor kann aus Jedem geeigneten Material hergestellt sein - er kann aus Metall, aber auch zumindest teilweise - bis auf die Permanentmagneten - aus anderen Materialien bestehen, bspw. aus Kunststoff - ggf. verstärktem Kunststoff, der den Vorteil geringer Korrosionsanfälligkeit bei geringem Gewicht besitzt oder aber aus entsprechender Keramik.

## Patentansprüche

1. Vorrichtung zur Konstantstromerzeugung, mit:
- einer Rotationsenergiequelle,
- einem Generator (G), mit: einem angetriebenen Generatorrotor (10) spezieller magnetfeldspezifischer Geometrie und einer Statorbaugruppe (12) mit auf den Generatorrotor (10) abgestimmter Geometrie,
- Mitteln zur Übertragung der mechanischen Rotationsenergie an den Generatorrotor (10),
- Mitteln (BGU) zum Abführen des durch den Generator (G) erzeugten Wechselstroms in einen mittelwertbildenden Gleichstromkreis, und
- einer mit dem Generator (G) verbundenen Rückwirkungssteuerung, die entsprechend den Generatorparametern das im Generator (G) erzeugte Magnetfeld derart steuert, dass eine im Wesentlichen konstante Stromstärke unabhängig von der in den Generator (G) eingebrachten und abgeführten Energie resultiert und von diesem abgegeben wird,
**dadurch gekennzeichnet, dass** eine Zwischenkreisregelung zwischen den Ausgängen des Mittels (BGU) zum Abführen des durch den Generator (G) erzeugten Wechselstroms in einen mittelwertbildenden Gleichstromkreis angeordnet ist, wobei in der Zwischenkreisregelung ein erster Kondensator (C1) und ein zweiter Kondensator (C2) in Reihenschaltung zwischen den Ausgängen (+ZK,-ZK) der Zwischenkreisregelung angeordnet sind, und in der Zwischenkreisregelung ferner gesteuerte Schaltelemente (RWS1, RWS2) angeordnet sind, wobei die Zwischenkreisregelung dafür ausgebildet ist, die gesteuerten Schaltelemente (RWS1, RWS2) derart anzusteuern, dass die folgenden Betriebszustände eingestellt werden können:
- der Generator (G) ist kurzgeschlossen, und
- der erste Kondensator (C1) ist parallel zum Generator (G) geschaltet, und
- der zweite Kondensator (C2) ist parallel zum Generator (G) geschaltet, und
- die Kondensatoren (C1, C2) sind in Reihenschaltung parallel zum Generator (G) geschaltet,
um das Verhältnis von Laststrom und Generatorstrom so zu ändern, dass der Generatorstrom wieder in einem Sollwertbereich liegt, und wobei die genannten Geometrien so ausgebildet werden, dass sie sowohl lokale magnetische Sättigungseffekte als auch gezielte Feldverzerrungseffekte zur Herstellung eines drehzahlunabhängigen Konstantstroms bewirken.

2. Vorrichtung nach Anspruch 1, **dadurch gekennzeichnet, dass** die Schaltelemente (RWS1, RWS2) als Bipolartransistoren mit isoliertem Gate (IGBT) ausgebildet sind.

3. Vorrichtung nach einem der vorhergehenden Ansprüche, **dadurch gekennzeichnet, dass** der Generatorrotor (10) ein Außenläufer ist.

4. Vorrichtung nach Anspruch 2 oder 3, **dadurch gekennzeichnet, dass** der Außenläufer einstückig mit dem Außengehäuse ausgebildet ist, das an seinem Außenumfang Luftleitschlaufen (14) aufweist.

5. Vorrichtung nach Anspruch 2 oder 3, **dadurch gekennzeichnet, dass** ein rotierendes Teil der Rotationsenergiequelle, wie die Abtriebswelle oder ein Schwungrad, direkt mit dem Generatorrotor (10) verbunden ist.

6. Vorrichtung nach einem der vorhergehenden Ansprüche, **dadurch gekennzeichnet, dass** der Steuerschaltkreis dafür ausgebildet ist, die Rotationsenergiequelle zu regeln.

7. Vorrichtung nach einem der vorhergehenden Ansprüche, **dadurch gekennzeichnet, dass** die Rotationsenergiequelle ein Verbrennungsmotor, eine Turbine, ein angetriebenes Rad, ein Windkraftrad, ein Hydraulikmotor oder ein Luftmotor ist.

8. Verfahren zur Konstantstromerzeugung mittels einer Rotationsenergiequelle, eines Generators (G) mit: einem angetriebenen Generatorrotor (10) spezieller magnetfeldspezifischer Geometrie und einer Statorbaugruppe (12) mit auf den Generatorrotor (10) abgestimmter Geometrie, sowie eines am Generator (G) angeschlossenen Steuerschaltkreises, mit:
Herstellung mechanischer Rotationsenergie durch die Rotationsenergiequelle,
Übertragung der mechanischen Rotationsenergie an den Generatorrotor (10),
Regeln der im Generator (G) erzeugten Magnetfeldverteilung durch den Steuerschaltkreis, der in Rückwirkungssteuerung die Stromverteilung im Generator (G) zwischen Laststrom und Generatorstrom regeln kann, indem ein magnetisches Gegenfeld im Generator (G) derart erzeugt wird, dass eine verlustarme Anpassung der Leistungsaufnahme und der Stromabgabe erfolgt, und eine im Wesentlichen konstante Stromstärke unabhängig von der in den Generator (G) eingebrachten und abgeführten Energie resultiert und von diesem abgegeben wird, und
Abführen des durch den Generator (G) erzeugten Wechselstroms in einen mittelwertbildenden Gleichstromkreis,
**dadurch gekennzeichnet, dass** eine Zwischenkreisregelung gesteuerte Schaltelemente (RWS1, RWS2) aufweist, die derart angesteuert werden, dass die folgenden Betriebszustände eingestellt werden können:
- der Generator (G) ist kurzgeschlossen, und
- ein erster Kondensator (C1) ist parallel zum Generator (G) geschaltet, und
- ein zweiter Kondensator (C2) ist parallel zum Generator (G) geschaltet, und
- die Kondensatoren (C1, C2) sind in Reihenschaltung parallel zum Generator (G) geschaltet,
um das Verhältnis von Laststrom und Generatorstrom so zu ändern, dass der Generatorstrom wieder in einem Sollwertbereich liegt, und wobei die genannten Geometrien so ausgebildet werden, dass sie sowohl lokale magnetische Sättigungseffekte als auch gezielte Feldverzerrungseffekte zur Herstellung eines drehzahlunabhängigen Konstantstroms bewirken.

9. Verfahren nach Anspruch 8, **dadurch gekennzeichnet, dass** der Generatorrotor (10) ein Außenläufer ist.

## Claims

1. Apparatus for generating a constant current, the apparatus comprising:
- a rotary energy source,
- a generator (G) comprising: a powered generator rotor (10) having a special geometry specific for a magnetic field, and a stator assembly (12) having a geometry adapted to the generator rotor (10),
- means for transferring the mechanical rotary energy to the generator rotor (10),
- means (BGU) for conducting the alternating current that is generated by the generator (G) away into an averaging direct current circuit, and
- a retro action control connected to the generator (G), which controls the magnetic field generated in the generator (G) based on the parameters of the generator, such that a substantially constant current results and is provided by the generator independent of the energy provided to or conducted away from the generator (G),
**characterized in that** an intermediate circuit control is arranged between the outputs of the means (BGU) for conducting the alternating current that is generated by the generator (G) away into an averaging direct current circuit, wherein the intermediate circuit control comprises a first capacitor (C1) and a second capacitor (C2) arranged in a series arrangement between the outputs (+ZK, -ZK) of the intermediate circuit control, and **in that** further controlled switching elements (RWS1, RWS2) are arranged in the intermediate circuit control, wherein the intermediate circuit control is adapted to drive the controlled switching elements (RWS1, RWS2) in such a manner that the following operating conditions can be obtained:
- the generator (G) is short-circuited, and
- the first capacitor (C1) is arranged in parallel to the generator (G), and
- the second capacitor (C2) is arranged in parallel to the generator (G), and
- the capacitors (C1, C2) are arranged in parallel to the generator (G),
in order to vary the ratio of load current and generator current in such a manner, that the generator current lies within a desired range, and wherein said geometries are configured such that they achieve local magnetic saturation effects as well as desired field distortion effects for providing a constant current that is independent of the rotation speed.

2. Apparatus according to claim 1, **characterized in that** the switching elements (RWS1, RWS2) are configured as bipolar transistors with an isolated gate (IGBT).

3. Apparatus according to any preceding claim, **characterized in that** the generator rotor (10) is configured as an external rotor.

4. Apparatus according to claim 2 or 3, **characterized in that** the external rotor is provided in a monolithic arrangement with the outer enclosure which has air guiding blades (14) at the outer perimeter.

5. Apparatus according to claim 2 or 3, **characterized in that** a rotary part of the rotary energy source, like an output shaft or a fly wheel, is directly connected to the generator rotor (10).

6. Apparatus according to any preceding claim, **characterized in that** the control circuit is configured to control the rotary energy source.

7. Apparatus according to any preceding claim, **characterized in that** the rotary energy source is a combustion engine, a turbine, a powered wheel, a wind generator, a hydraulic engine or an air motor.

8. Method for providing a constant current using a rotary energy source, a generator (G) comprising: a powered generator rotor (10) having a special geometry specific for a magnetic field, and a stator assembly (12) having a geometry adapted to the generator rotor (10), as well as a control circuit connected to the generator (G), the method comprising the steps of:
providing mechanical rotary energy via the rotary energy source,
transmitting the mechanical rotational energy to the generator rotor (10),
controlling the distribution of the magnetic field generated in the generator (G) by the control circuit, which can control the current distribution in the generator (G) between load current and generator current by retro action control, by generating a magnetic counter field in the generator (G) in such a manner that a low-loss adaption of the power consumption and the current output and a substantially constant current results and is provided by the generator independent of the energy provided to and conducted away from the generator (G), and
conducting away the alternating current generated by the generator (G) into an averaging direct current circuit,
**characterized by** an intermediate circuit control having control switching elements (RWS1, RWS2), which can be controlled such that the following operating conditions can be obtained:
- the generator (G) is short-circuited, and
- a first capacitor (C1) is arranged in parallel to the generator (G), and
- a second capacitor (C2) is arranged in parallel to the generator (G), and
- the capacitors (C1, C2) are arranged in parallel to the generator (G),
in order to vary the ratio of load current and generator current in such a manner, that the generator current lies within a desired range, and wherein said geometries are configured such that they achieve local magnetic saturation effects as well as desired field distortion effects for providing a constant current that is independent of the rotation speed.

9. Method according to claim 8, **characterized in that** the generator rotor (10) is configured as an external rotor.

## Revendications

1. Dispositif de production de courant constant, avec :
- une source d'énergie de rotation,
- un alternateur (G), comprenant un rotor d'alternateur entraîné (10) ayant une géométrie spéciale spécifique pour le champ magnétique, et un ensemble de stator (12) ayant une géométrie adaptée au rotor d'alternateur (10),
- des moyens pour transmettre l'énergie de rotation mécanique au rotor d'alternateur (10),
- des moyens (BGU) pour évacuer le courant alternatif produit par l'alternateur (G) dans un circuit à courant continu prenant la moyenne, et
- une commande à rétroaction reliée à l'alternateur (G), qui commande en fonction des paramètres de l'alternateur le champ magnétique produit dans l'alternateur (G) de telle sorte qu'on obtient une intensité de courant essentiellement constante indépendamment de l'énergie introduite dans l'alternateur (G) et évacuée de ce dernier, intensité qui est délivrée par l'alternateur (G),
**caractérisé en ce qu'**un circuit intermédiaire de régulation est disposé entre les sorties des moyens (BGU) pour évacuer le courant alternatif produit par l'alternateur (G) dans un circuit à courant continu prenant la moyenne, sachant qu'un premier condensateur (C1) et un deuxième condensateur (C2) sont disposés sous forme de montage en série dans le circuit intermédiaire de régulation entre les sorties (+ZK,-ZK) du circuit intermédiaire de régulation, et que des éléments de commutation asservis (RWS1, RWS2) sont en outre disposés dans le circuit intermédiaire de régulation, sachant que le circuit intermédiaire de régulation est conçu pour asservir les éléments de commutation asservis (RWS1, RWS2) de telle sorte qu'on peut régler les états de fonctionnement suivants :
- l'alternateur (G) est court-circuité, et
- le premier condensateur (C1) est monté en parallèle avec l'alternateur (G), et
- le deuxième condensateur (C2) est monté en parallèle avec l'alternateur (G), et
- les condensateurs (C1, C2) sont montés en série parallèlement à l'alternateur (G),
afin de modifier le rapport du courant de charge et du courant d'alternateur de telle sorte que le courant d'alternateur se situe à nouveau dans une plage de valeur de consigne, et sachant que les géométries précitées sont conçues de telle sorte qu'elles engendrent à la fois des effets locaux de saturation magnétique et des effets ciblés de distorsion de champ, afin de produire un courant constant indépendant de la vitesse de rotation.

2. Dispositif selon la revendication 1, **caractérisé en ce que** les éléments de commutation (RWS1, RWS2) sont réalisés sous forme de transistors bipolaires à grille isolée (IGBT).

3. Dispositif selon l'une des revendications précédentes, **caractérisé en ce que** le rotor d'alternateur (10) est un induit extérieur.

4. Dispositif selon la revendication 2 ou 3, **caractérisé en ce que** l'induit extérieur est réalisé d'un seul tenant avec le carter extérieur, qui présente sur sa périphérie extérieure des ailettes de guidage d'air (14).

5. Dispositif selon la revendication 2 ou 3, **caractérisé en ce qu'**un élément rotatif de la source d'énergie de rotation, tel que l'arbre de sortie ou un volant d'énergie, est directement relié au rotor d'alternateur (10).

6. Dispositif selon l'une des revendications précédentes, **caractérisé en ce que** le circuit de commande est conçu pour réguler la source d'énergie de rotation.

7. Dispositif selon l'une des revendications précédentes, **caractérisé en ce que** la source d'énergie de rotation est un moteur thermique, une turbine, une roue entraînée, une roue d'éolienne, un moteur hydraulique ou un moteur pneumatique.

8. Procédé de production de courant constant au moyen d'une source d'énergie de rotation, d'un alternateur (G) comprenant un rotor d'alternateur entraîné (10) ayant une géométrie spéciale spécifique pour le champ magnétique, et un ensemble de stator (12) ayant une géométrie adaptée au rotor d'alternateur (10), et d'un circuit de commande raccordé à l'alternateur (G), comprenant les étapes suivantes :
production d'énergie de rotation mécanique par la source d'énergie de rotation, transmission de l'énergie de rotation mécanique au rotor d'alternateur (10),
régulation de la répartition de champ magnétique produit dans l'alternateur (G), par le circuit de commande qui peut, par commande à rétroaction, réguler la répartition du courant dans l'alternateur (G) entre le courant de charge et le courant d'alternateur, par le fait qu'un champ magnétique inverse est produit dans l'alternateur (G) de telle sorte qu'il se produit une adaptation, avec une faible perte, de l'absorption de puissance et du débit de courant, et qu'on obtient une intensité de courant essentiellement constante indépendamment de l'énergie introduite dans l'alternateur (G) et évacuée de ce dernier, intensité qui est délivrée par cet alternateur,
et évacuation du courant alternatif produit par l'alternateur (G) dans un circuit à courant continu prenant la moyenne,
**caractérisé en ce qu'**un circuit intermédiaire de régulation présente des éléments de commutation asservis (RWS1, RWS2), qui sont asservis de telle sorte qu'on peut régler les états de fonctionnement suivants :
- l'alternateur (G) est court-circuité, et
- un premier condensateur (C1) est monté en parallèle avec l'alternateur (G), et
- un deuxième condensateur (C2) est monté en parallèle avec l'alternateur (G), et
- les condensateurs (C1, C2) sont montés en série parallèlement à l'alternateur (G),
afin de modifier le rapport du courant de charge et du courant d'alternateur de telle sorte que le courant d'alternateur se situe à nouveau dans une plage de valeur de consigne, et sachant que les géométries précitées sont conçues de telle sorte qu'elles engendrent à la fois des effets locaux de saturation magnétique et des effets ciblés de distorsion de champ, afin de produire un courant constant indépendant de la vitesse de rotation.

9. Procédé selon la revendication 8, **caractérisé en ce que** le rotor d'alternateur (10) est un induit extérieur.
